# EUROPEAN PATENT APPLICATION

(11) **EP 4 848 523 A1**
(43) Date of publication of application: **02.12.2026**
(21) Application number: 26182016.1
(22) Date of filing: 29.05.2026
(51) Int. Cl.: H02J 3/50, H02J 3/38, H02J 13/16, H02J 101/28

(54) **SYSTEM AND METHOD FOR VOLTAGE CONTROL OF INVERTER-BASED RESOURCES**

(30) Priority: 29.05.2025 US 202519222227
(71) Applicant: GE Vernova Infrastructure Technology LLC, Greenville, SC 29615 (US)
(72) Inventor: Djan-Sampson, Patrick Osae, Greenville, SC 29615 (US); Howard, Dustin F., Greenville, SC 29615 (US)
(74) Representative: Zimmermann & Partner Patentanwälte mbB

(57) **Abstract**

A method is provided for regulating voltage at a point of interconnection between a plurality of inverter-based resources (IBRs), including a first IBR configured to be controlled based at least partially on a reactive power command signal and a second IBR configured to be controlled based at least partially on a voltage command signal, and an electrical grid. The method includes determining, via a supervisory controller, a voltage error signal based at least partially on a voltage feedback signal and a voltage reference signal. The method also includes determining, via the supervisory controller, a voltage command signal and a reactive power balance signal based at least partially on the voltage error signal. Further, the method includes providing, via the supervisory controller, the voltage command signal to the second IBR. Moreover, the method includes determining, via the supervisory controller, a reactive power command signal based at least partially on the reactive power balance signal. In addition, the method includes providing, via the supervisory controller, the reactive power command signal to the first IBR.

## Description

### FIELD

The present disclosure relates generally to inverter-based resources, such as wind turbines, and more particularly, to systems and methods for controlling voltage for a combination of reactive power regulated and voltage regulated inverters.

### BACKGROUND

Wind power generation is typically provided by a wind farm of a large number (often 100 or more) wind turbine generators collectively coupled to a utility grid at a point of interconnection. The wind farm can include a control system having a farm level controller(s) and turbine level controller(s) to regulate the real and reactive power output of the individual wind turbines.

Voltage regulation at the point of interconnection for the wind farm can, for example, be accomplished by regulating the reactive power output of the wind farm. For instance, a control system can provide reactive power commands (Q commands) to each of the plurality of inverters in the wind farm to control the reactive power output of the individual inverters to achieve a desired reactive power output at the point of interconnection for the wind farm.

As another example, voltage regulation at the point of interconnection for the wind farm can be accomplished by regulating voltage output of the wind farm. For instance, the control system can provide, to each of the plurality of inverters in the wind farm, a common voltage setpoint and an average of the reactive power output of all of the inverters in the wind farm to facilitate reactive power sharing among the various inverters.

Typically, each of the plurality of inverters in the wind farm are controlled in a same manner. As such, the control system can implement one of the reactive power regulation or the voltage regulation. However, in some situations, the wind farm may include some inverters that require voltage regulation and some inverters that require reactive power regulation. In such cases, the control system may be unable to effectively control all of the inverters in the farm to meet the steady state and transient requirement at the point of interconnection as some of the inverters may require a different control structure than other inverters.

In view of the foregoing, the present disclosure is directed to a system and method controlling voltage for a combination of reactive power regulated and voltage regulated inverters.

### BRIEF DESCRIPTION

Aspects and advantages of the invention will be set forth in part in the following description, or may be obvious from the description, or may be learned through practice of the invention.

In an aspect, the present disclosure is directed to a method for regulating voltage at a point of interconnection between a plurality of inverter-based resources (IBRs) and an electrical grid. The plurality of IBRs includes a first IBR configured to be controlled based at least partially on a reactive power command signal and a second IBR configured to be controlled based at least partially on a voltage command signal. The method includes determining, via a supervisory controller, a voltage error signal based at least partially on a voltage feedback signal and a voltage reference signal. The method also includes determining, via the supervisory controller, a voltage command signal and a reactive power balance signal based at least partially on the voltage error signal. Further, the method includes providing, via the supervisory controller, the voltage command signal to the second IBR. Moreover, the method includes determining, via the supervisory controller, a reactive power command signal based at least partially on the reactive power balance signal. In addition, the method includes providing, via the supervisory controller, the reactive power command signal to the first IBR.

In an aspect, the present disclosure is directed a wind farm. The wind farm includes a plurality of wind turbines including a first wind turbine configured to be controlled based at least partially on a reactive power command signal and a second wind turbine configured to be controlled based at least partially on a voltage command signal. The wind farm also includes a farm-level controller comprising at least one processor. The at least one processor is configured to perform a plurality of operations. The plurality of operations include determining a voltage error signal based at least partially on a voltage feedback signal and a voltage reference signal. The plurality of operations also include determining a voltage command signal and a reactive power balance signal based at least partially on the voltage error signal. Further, the plurality of operations include providing the voltage command signal to the second wind turbine. Moreover, the plurality of operations include determining a reactive power command signal based at least partially on the reactive power balance signal. In addition, the plurality of operations include providing the reactive power command signal to the first wind turbine.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a perspective view of an embodiment of a wind turbine according to the present disclosure;
FIG. 2 illustrates a block diagram of an embodiment of a controller according to the present disclosure;
FIG. 3 illustrates a schematic view of an embodiment of a wind farm having a plurality of wind turbines according to the present disclosure;
FIG. 4 illustrates a flow diagram of an embodiment of a method for controlling a wind farm according to the present disclosure;
FIG. 5 illustrates a block diagram of an embodiment of a control topology for a wind farm according to the present disclosure;
FIG. 6 illustrates a schematic diagram of an embodiment of an inner loop voltage regulator according to the present disclosure;
FIG. 7 illustrates a schematic diagram of an embodiment of a VAR regulator according to the present disclosure; and
FIG. 8 illustrates a schematic diagram of an embodiment of an outer loop VAR distributor according to the present disclosure.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of an embodiment can be used with another embodiment to yield a still further embodiment. Thus, it is intended that the present invention covers such modifications and variations as come within the scope of the appended claims and their equivalents.

Generally, a renewable energy power plant, such as a wind farm, having a plurality of inverter-based resources (IBRs) may require voltage regulation at a point of interconnection (POI) with an electrical grid. Typically, voltage regulation at the POI for the wind farm can be accomplished via a reference voltage control scheme or a reactive power control scheme.

The reference voltage control scheme may be utilized when the renewable energy power plant includes only IBRs configured to be controlled based on a reference voltage command. In such examples, the reference voltage control scheme may be implemented with relatively fast regulation of voltage for individual IBRs at the terminals or at a synthesized remote point (e.g., between the terminals and a collector bus). A relatively slow reactive power regulator adjusts the set point of the relatively fast voltage regulator as a function of a reference reactive power command received from a farm-level controller and the reactive power feedback. A voltage trim signal is thus used to adjust the voltage setpoint of a relatively fast voltage regulator that generates the reactive current command for the IBR.

The reactive power control scheme may be utilized when the renewable energy power plant includes only IBRs configured to be controlled based on a reactive power command. In such examples, the reactive power control scheme may be implemented with an inner loop voltage regulator and an outer loop reactive power/power factor regulator. The voltage regulator can compute reactive power commands based at least in part on reactive power limits of the renewable energy plant. The reactive power commands can then be distributed to individual IBRs (e.g., using a proportional distribution algorithm).

However, in cases where the renewable energy power plant includes some IBRs configured to be controlled based on a reference voltage command and some IBRs configured to be controlled based on a reactive power command, neither the reference voltage control scheme nor the reactive power control scheme may be able to meet the voltage regulation requirements for each of the IBRs in the renewable energy power plant. For instance, the reference voltage control scheme may not provide reactive power commands to the IBRs configured to be controlled based on a reactive power command. In addition, the reactive power control scheme may provide commands too slowly to respond to a step change in the IBRs configured to be controlled based on a reference voltage command.

In view of the foregoing, the present disclosure is directed to systems and methods for regulating voltage at the POI between the electrical grid and a renewable energy power plant having IBRs configured to be controlled by different voltage regulation control schemes. In particular, systems and methods of the present disclosure include determining a voltage command signal and a reactive power balance signal based at least partially on a voltage error signal derived in a relatively fast inner loop voltage regulator. Further, a reactive power command signal is determined based on the reactive power balance signal in a relatively slow outer loop reactive power regulator. The voltage command signal is provided to the IBRs configured to be controlled by the reference voltage control scheme, and the reactive power command signal is provided to the IBRs configured to be controlled by the reactive power control scheme.

Determining the reactive power balance signal based on the voltage error signal allows for relatively fast dispatch of the reactive power command, which allows for a dynamic response to voltage disturbances at the POI. As such, systems and methods of the present disclosure can control a renewable energy plant with IBRs configured to be controlled by different control schemes to achieve regulation functions needed by an electrical grid.

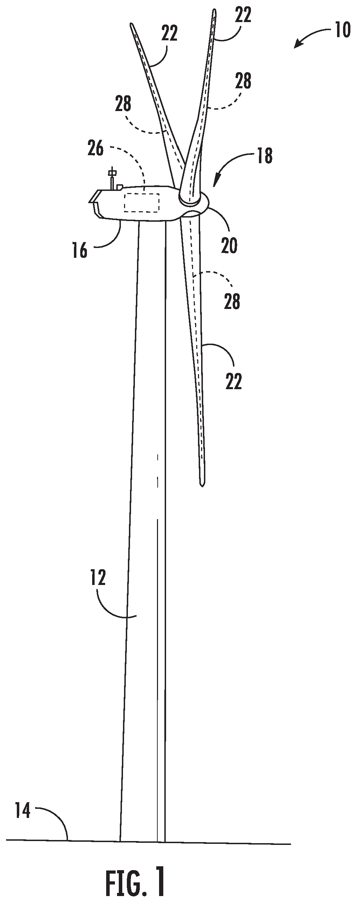

Referring now to the figures, FIG. 1 illustrates a perspective view of an embodiment of a wind turbine 10 according to the present disclosure. As shown, the wind turbine 10 generally includes a tower 12 extending from a support surface 14, a nacelle 16 mounted on the tower 12, and a rotor 18 coupled to the nacelle 16. The rotor 18 includes a rotatable hub 20 and at least one rotor blade 22 coupled to and extending outwardly from the hub 20. For example, in the illustrated embodiment, the rotor 18 includes three rotor blades 22. However, in an alternative embodiment, the rotor 18 may include more or less than three rotor blades 22. Each rotor blade 22 may be spaced about the hub 20 to facilitate rotating the rotor 18 to enable kinetic energy to be transferred from the wind into usable mechanical energy, and subsequently, electrical energy. For instance, the hub 20 may be rotatably coupled to an electric generator (not shown) positioned within the nacelle 16 to permit electrical energy to be produced.

The wind turbine 10 may also include a wind turbine controller 26 centralized within the nacelle 16. However, in other embodiments, the controller 26 may be located within any other component of the wind turbine 10 or at a location outside the wind turbine. Further, the controller 26 may be communicatively coupled to any number of the components of the wind turbine 10 in order to control the operation of such components and/or to implement a control action. As such, the controller 26 may include a computer or other suitable processing unit. Thus, in several embodiments, the controller 26 may include suitable computer-readable instructions that, when implemented, configure the controller 26 to perform various different functions, such as receiving, transmitting and/or executing wind turbine control signals.

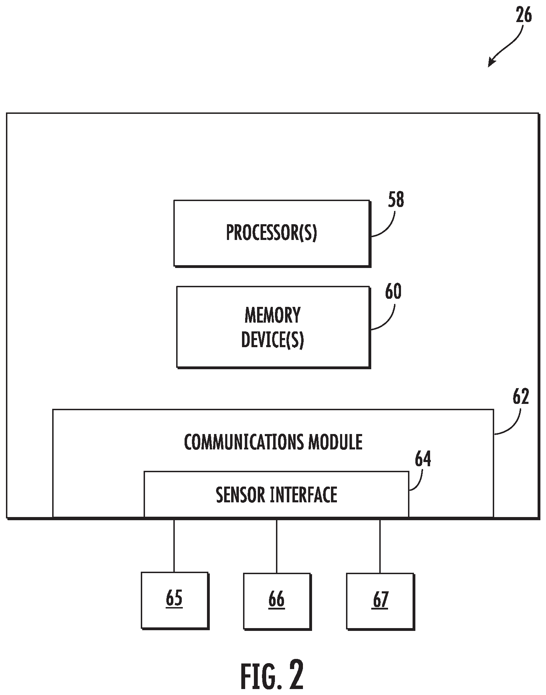

Referring now to FIG. 2, a block diagram of an embodiment of suitable components that may be included within the controller 26 is illustrated in accordance with aspects of the present disclosure. As shown, the controller 26 may include one or more processor(s) 58 and associated memory device(s) 60 configured to perform a variety of computer-implemented functions (e.g., performing the methods, steps, calculations and the like disclosed herein). As used herein, the term "processor" refers not only to integrated circuits referred to in the art as being included in a computer, but also refers to a controller, a microcontroller, a microcomputer, a programmable logic controller (PLC), an application specific integrated circuit, application-specific processors, digital signal processors (DSPs), Application Specific Integrated Circuits (ASICs), Field Programmable Gate Arrays (FPGAs), and/or any other programmable circuits. Further, the memory device(s) 60 may generally include memory element(s) including, but are not limited to, computer readable medium (e.g., random access memory (RAM)), computer readable non-volatile medium (e.g., a flash memory), one or more hard disk drives, a floppy disk, a compact disc-read only memory (CD-ROM), compact disk-read/write (CD-R/W) drives, a magneto-optical disk (MOD), a digital versatile disc (DVD), flash drives, optical drives, solid-state storage devices, and/or other suitable memory elements.

Additionally, the controller 26 may also include a communications module 62 to facilitate communications between the controller 26 and the various components of the wind turbine 10. For instance, the communications module 62 may include a sensor interface 64 (e.g., one or more analog-to-digital converters) to permit the signals transmitted by one or more sensors 65, 66, 67 to be converted into signals that can be understood and processed by the controller 26. Furthermore, it should be appreciated that the sensors 65, 66, 67 may be communicatively coupled to the communications module 62 using any suitable means. For example, as shown in FIG. 2, the sensors 65, 66, 67 are coupled to the sensor interface 64 via a wired connection. However, in alternative embodiments, the sensors 65, 66, 67 may be coupled to the sensor interface 64 via a wireless connection, such as by using any suitable wireless communications protocol known in the art. For example, the communications module 62 may include the Internet, a local area network (LAN), wireless local area networks (WLAN), wide area networks (WAN) such as Worldwide Interoperability for Microwave Access (WiMax) networks, satellite networks, cellular networks, sensor networks, ad hoc networks, and/or short-range networks. As such, the processor 58 may be configured to receive one or more signals from the sensors 65, 66, 67.

The sensors 65, 66, 67 may be any suitable sensors configured to measure any operating data points of the wind turbine 10 and/or wind parameters of the wind farm. It should also be understood that any other number or type of sensors may be employed and at any location. For example, the sensors may be accelerometers, pressure sensors, strain gauges, angle of attack sensors, vibration sensors, MIMU sensors, camera systems, fiber optic systems, anemometers, wind vanes, Sonic Detection and Ranging (SODAR) sensors, infra lasers, Light Detecting and Ranging (LIDAR) sensors, radiometers, pitot tubes, rawinsondes, other optical sensors, and/or any other suitable sensors. It should be appreciated that, as used herein, the term "monitor" and variations thereof indicates that the various sensors of the wind turbine 10 may be configured to provide a direct measurement of the parameters being monitored or an indirect measurement of such parameters. Thus, the sensors 65, 66, 67 may, for example, be used to generate signals relating to the parameter being monitored, which can then be utilized by the controller 26 to determine the actual condition.

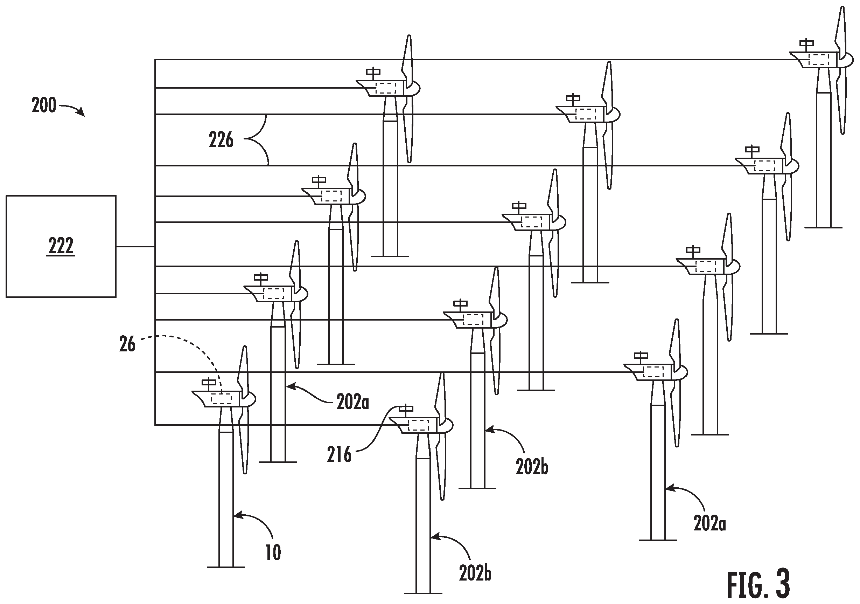

Referring now to FIG. 3, a schematic diagram of an embodiment of a wind farm 200 that is controlled according to example aspects of the present disclosure is illustrated. As shown, the wind farm 200 may include a plurality of wind turbines 202a, 202b, including the wind turbine 10 described above, and a farm-level controller 222. For example, as shown in the illustrated embodiment, the wind farm 200 includes twelve wind turbines, including wind turbine 10. However, in other embodiments, the wind farm 200 may include any other number of wind turbines, such as less than twelve wind turbines or greater than twelve wind turbines. In an embodiment, the controller 26 of the wind turbine 10 may be communicatively coupled to the farm-level controller 222 through a wired connection, such as by connecting the controller 26 through suitable communicative links 226 (e.g., a suitable cable). Alternatively, the controller 26 may be communicatively coupled to the farm-level controller 222 through a wireless connection, such as by using any suitable wireless communications protocol known in the art. In addition, the farm-level controller 222 may be generally configured similar to the controllers 26 for each of the individual wind turbines 202a, 202b within the wind farm 200.

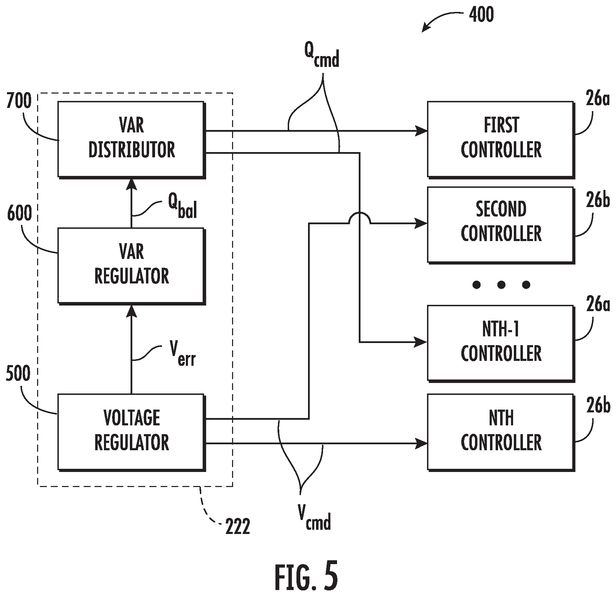

The plurality of wind turbines 202a, 202b may include one or more first wind turbines 202a and one or more second wind turbines 202b. The first wind turbine(s) 202a may be configured as reactive-power-referenced-based inverters, and the second wind turbines 202b may be configured as voltage-referenced-based inverters. As such, the first wind turbine(s) 202a may be controlled at least partially by a reactive power command signal, as will be described further in regard to FIGS. 5-8. In addition, the second wind turbine(s) 202b may be controlled at least partially by a voltage command signal, as will be described further in regard to FIG. 5-6.

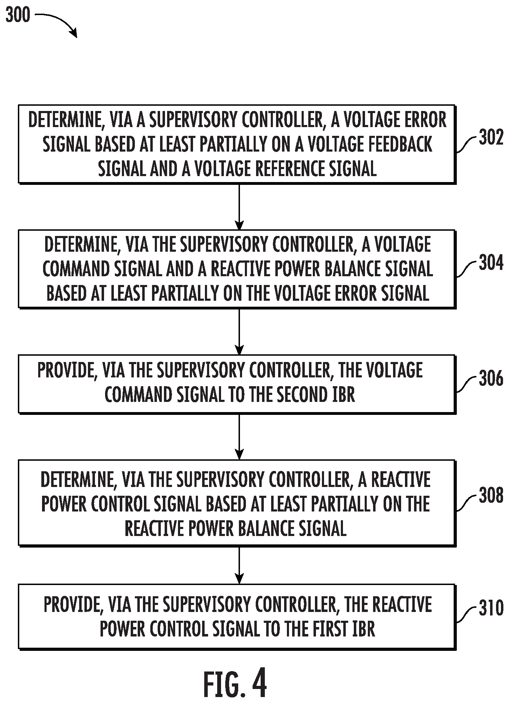

Referring now to FIG. 4, a flow diagram of an embodiment of a method 300 for regulating voltage at a point of interconnection (POI) between a plurality of IBRs and an electrical grid is illustrated according to the present disclosure. More specifically, in an embodiment and as mentioned, the plurality of IBRs may include one or more first IBRs (such as the first wind turbines 202a) configured to be controlled by a reactive power command signal and one or more second IBRs (such as the second wind turbines 202b) configured to be controlled by a voltage command signal. It should be appreciated that the disclosed method 300 may be implemented with any suitable IBR generator having any suitable configuration. In addition, although FIG. 4 depicts steps performed in a particular order for purposes of illustration and discussion, the methods discussed herein are not limited to any particular order or arrangement. One skilled in the art, using the disclosures provided herein, will appreciate that various steps of the methods disclosed herein can be omitted, rearranged, combined, and/or adapted in various ways without deviating from the scope of the present disclosure.

As shown at (302), the method 300 includes determining, via a supervisory controller (such as the farm-level controller 222), a voltage error signal based at least partially on a voltage feedback signal and a voltage reference signal. Feeback signal(s), as discussed herein, may be measured by the one or more sensors 66 and/or determined by (e.g., according to known mathematical techniques) one or more controllers 26, 222 (e.g., based on measurements received from the one or more sensors 66). In some embodiments, the voltage reference signal may be determined based at least partially on a voltage setpoint signal, as will be described below. In some embodiments, the voltage reference signal may be determined based additionally on a reactive power setpoint or a power factor setpoint, as will be described below.

As shown at (304), the method 300 includes determining, via the supervisory controller, a voltage command signal and a reactive power balance signal based at least partially on the voltage error signal. In embodiments, the supervisory controller can provide the voltage error signal to a first proportional-integral (PI) controller to obtain a first PI signal. Further, the supervisory controller can determine the voltage command signal based on the first PI signal. In embodiments, the supervisory controller can provide the voltage error signal to a second PI regulator to obtain a second PI signal. Further, the supervisory controller can determine the reactive power balance signal based at least partially on the second PI signal. Moreover, the first and second PI signals may be limited by respective upper and lower limits, as will be described below. In addition, the supervisory controller can provide the second PI signal and a reactive power feedback signal to a reactive power balance distributor. The reactive power feedback signal may be associated with the at least one first IBR, as will be described below. The reactive power balance distributor can then output the reactive power balance signal.

As shown at (306), the method 300 includes providing, via the supervisory controller, the voltage command signal to one or more second subordinate controllers (such as a wind turbine controller 26) configured to control the second IBR(s). In an embodiment, upon receiving the voltage command signal from the supervisory controller, the subordinate controller(s) can then control the second IBR(s) based at least partially on the voltage command signal.

As shown at (308), the method 300 includes determining, via the supervisory controller, a reactive power command signal based at least partially on the reactive power balance signal. In embodiments, the supervisory controller can determine the reactive power command signal based on a reactive power expected signal and the reactive power balance signal. For instance, the supervisory controller can determine the reactive power expected signal based on providing an average reactive power signal to a total reactive power balance distributor. Further, the supervisory controller can determine the average reactive power signal based on one or more first reactive power feedback signals associated with the first IBR(s) and one or more second reactive power feedback signals associated with the second IBR(s), as will be described below.

As shown at (310), the method 300 includes providing, via the supervisory controller, the reactive power command signal to one or more first subordinate controllers (such as a wind turbine controller 26) configured to control the first IBR(s). In an embodiment, upon receiving the reactive power command signal from the supervisory controller, the first subordinate controller(s) can then control the first IBR(s) based at least partially on the reactive power command signal.

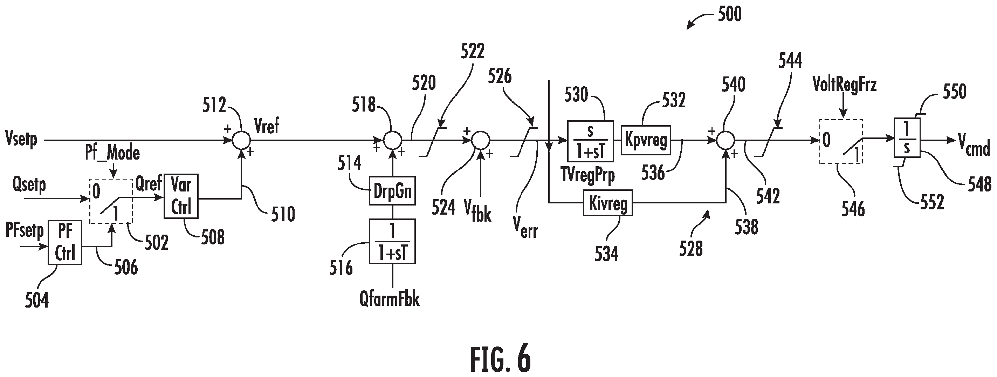

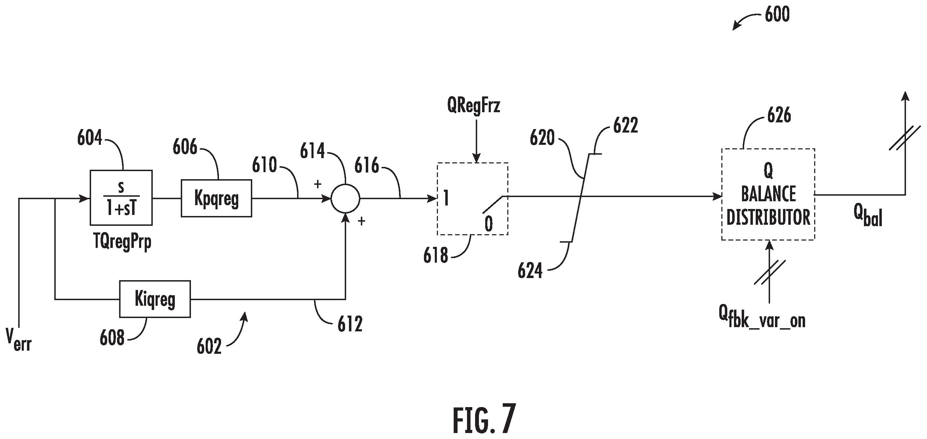

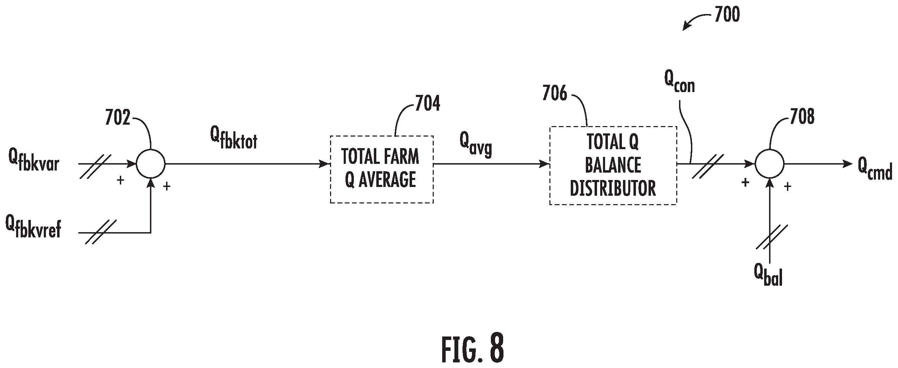

The method 300 of FIG. 4 can be better understood with reference to FIGS. 5-8. In particular, FIG. 5 illustrates a block diagram of an embodiment of a control scheme 400 for controlling a wind farm according to embodiments of the present disclosure. The control scheme 400 can be implemented using one or more control devices, such the farm-level controller 222 and various individual controllers 26 associated with the individual wind turbines in the wind farm 200 shown in FIG. 3. More specifically, FIG. 6 illustrates a schematic diagram of an embodiment of an inner loop voltage regulator 500 for the wind farm 200 according to the present disclosure. FIG. 7 illustrates a schematic diagram of an embodiment of a reactive power regulator 600 for the wind farm 200 according to the present disclosure. FIG. 8 illustrates a schematic diagram of an embodiment of an outer loop VAR distributor 700 for the wind farm 200 according to the present disclosure.

As shown in the embodiment illustrated in FIG. 5, the control scheme 400 may include one or more first controllers 26a and one or more second controllers 26b. The first controller(s) 26a are associated with respective first wind turbine(s) 202a in the wind farm 200. Further, the second controller(s) 26b are associated with respective second wind turbine(s) 202b in the wind farm 200. More specifically, the first controller(s) 26a are configured to control the first wind turbine(s) 202a based at least partially on a reactive power command signal (Q_{cmd}). In addition, the second controller(s) 26b are configured to control the second wind turbine(s) 202b based at least partially on a voltage command signal (V_{cmd}).

As shown, the farm-level controller 222 can include a voltage regulator 500 configured to provide the voltage command signal (V_{cmd}) to the second controller(s) 26b, and the VAR distributor 700 configured to provide the reactive power command signal (Q_{cmd}) to the first and second controller(s) 26a, 26b. Further, the farm-level controller 222 can include a reactive power regulator 600 configured to provide relatively fast dispatch of the reactive power command signal (Q_{cmd}) by determining a reactive power balance signal (Q_{bal}) based on a voltage error signal (Vₑᵣᵣ).

As shown in the embodiment illustrated in FIG. 6, the voltage regulator 500 may be configured to determine the voltage command signal (V_{cmd}) based on the voltage error signal (Vₑᵣᵣ). More specifically, as shown, the voltage regulator 500 may receive a voltage setpoint signal (Vₛₑₜₚ), a reactive power setpoint signal (Qₛₑₜₚ), and/or a power factor setpoint signal (PFₛₑₜₚ).

The voltage regulator 500 may be configured to determine a voltage reference signal (V_{ref}) based on the voltage setpoint signal (Vₛₑₜₚ), the reactive power setpoint signal (Qₛₑₜₚ), and/or the power factor setpoint signal (PFₛₑₜₚ). For instance, the voltage regulator 500 may operate in two different modes depending on a state of a mode select switch 502, which may be controlled by a power factor mode select signal (Pf_mode). When the mode select switch 502 is in position "1", a reactive power reference signal (Q_{ref}) may be determined based on the power factor setpoint signal (PFₛₑₜₚ). For instance, the power factor setpoint signal (PFₛₑₜₚ) may be provided to a power factor controller 504 to obtain an output signal 506. The output signal 506 may be the reactive power reference signal (Q_{ref}). When the mode select switch 502 is in position "0", the reactive power reference signal (Q_{ref}) may be the reactive power setpoint signal (Qₛₑₜₚ).

Further, as shown in FIG. 6, the voltage regulator 500 can provide the reactive power reference signal (Q_{ref}) to a VAR controller 508 to obtain an output signal 510. The voltage regulator 500 can determine the reference voltage signal (V_{ref}) by combining (e.g., via a summator 512) the output signal 510 and the voltage setpoint signal (Vₛₑₜₚ).

Furthermore, the voltage regulator 500 can receive one or more feedback signals. For instance, the voltage regulator 500 can receive a voltage feedback signal (V_{fbk}) and a reactive current feedback signal (Q_{farmFbk}) for the wind farm 200, as shown. As mentioned above, the feedback signal(s) may be measured by the one or more sensors 66 and/or determined by (e.g., according to known mathematical techniques) one or more controllers 26, 222 (e.g., based on measurements received from the one or more sensors 65, 66, 67).

The voltage regulator 500 can determine the voltage error signal (Vₑᵣᵣ) based on the reference voltage signal (V_{ref}) and the feedback signal(s) (Q_{farmFbk}, V_{fbk}). For instance, the voltage regulator 500 can include a droop gain 514 and a filter 516. Thus, in an embodiment, the reactive current feedback signal (Q_{farmFbk}) may be filtered via the filter 516 and then the droop gain 514 can be applied to the filtered value. The output of the droop gain 514 can then be combined (e.g., via a summator 518) with the reference voltage signal (V_{ref}) to obtain an input voltage signal 520. The voltage regulator 500 can then apply the input voltage signal 520 to a limiter 522. The limiter may place (e.g., fixed or dynamic) limits on the input voltage signal 520 as appropriate to respect equipment rating(s).

Moreover, the limited input voltage signal 520 may be compared (e.g., via a subtractor 524) with the voltage feedback signal (V_{fbk}) to obtain the voltage error signal (Vₑᵣᵣ). The voltage regulator 500 can then apply the voltage error signal (Vₑᵣᵣ) to a limiter 526, as shown. The limiter 526 may place (e.g., fixed or dynamic) limits on the voltage error signal (Vₑᵣᵣ) as appropriate to respect equipment rating(s).

Th voltage regulator 500 can then provide the limited voltage error signal (Vₑᵣᵣ) to a first proportional-integral (PI) regulator 528 to determine the voltage command signal (V_{cmd}), as shown. In addition, the voltage regulator 500 can provide the limited voltage error signal (Vₑᵣᵣ) to the reactive power regulator 600, as will be described further below in regard to FIG. 7. The first PI regulator 528 can include a filter 530, a proportional gain 532, and an integral gain 534. Thus, in an embodiment, the limited voltage error signal (Vₑᵣᵣ) may be filtered via the filter 530 and then the proportional gain 532 may be applied to the filtered value to obtain a first signal 536.

Further, the integral gain 534 may be applied to the limited voltage error signal (Vₑᵣᵣ) to obtain a second signal 538. The first PI regulator 528 can then combine (e.g., via a summator 540) the first and second signals 536, 538 to obtain a first PI signal 542. The proportional and integral gains 532, 534 of the first PI regulator 528 can be fixed or dynamic gains and can be determined based on desired operations of the wind farm 200 and/or a relative number of second wind turbines 202b in the wind farm 200. Furthermore, the voltage regulator 500 can then apply the first PI signal 542 to a limiter 544. The limiter may place (e.g., fixed or dynamic) limits on the first PI signal 542 as appropriate to respect equipment rating(s).

Moreover, the voltage regulator 500 may operate in two different modes depending on a state of a mode select switch 546, which may be controlled by a voltage regulation mode select signal (VolRegFrz). When the mode select switch 546 is in position "0", the voltage regulator 500 may prevent determination of the voltage command signal (V_{cmd}). The mode select switch 546 may be in the position "0" when the farm-level controller 222 is communicating with the first controller(s) 26a. Conversely, the mode select switch 546 may be in position "1" when the farm-level controller 222 is communicating with the second controller(s) 26b. When the mode select switch 546 is in the position "1", the limited first PI signal 542 is then integrated via an integrator 548 to obtain the voltage command signal (V_{cmd}). The voltage regulator 500 may be further configured to apply one or more constraints on the voltage command signal (V_{cmd}). For example, the constraint(s) may include an upper constraint 550 and a lower constraint 552 configured to constrain the voltage command signal (V_{cmd}) within the normal range of operation for the second controller(s) 26b. The upper constraint 550 and the lower constraint 552 may be fixed or dynamic variables. The voltage regulator 500 can then provide the voltage command signal (V_{cmd}) to the second controller(s) 26b. As such, the second controller(s) 26b can control the second wind turbine(s) 202b based at least partially on the voltage command signal (V_{cmd}).

As shown in the embodiment illustrated in FIG. 7, the reactive power regulator 600 may be configured to determine the reactive power reference signal (Q_{ref}) based on the voltage error signal (Vₑᵣᵣ). More specifically, as shown, the reactive power regulator 600 may receive the limited voltage error signal (Vₑᵣᵣ) from the voltage regulator 500. The reactive power regulator 600 can then provide the limited voltage error signal (Vₑᵣᵣ) to a second PI regulator 602 to determine the reactive power balance signal (Q_{bal}), as shown. The second PI regulator 602 can include a filter 604, a proportional gain 606, and an integral gain 608. Thus, in an embodiment, the limited voltage error signal (Vₑᵣᵣ) may be filtered via the filter 604 and then the proportional gain 606 may be applied to the filtered value to obtain a third signal 610. Further, the integral gain 608 may be applied to the limited voltage error signal (Vₑᵣᵣ) to obtain a fourth signal 612. The second PI regulator 602 can then combine (e.g., via a summator 614) the third and fourth signals 610, 612 to obtain a second PI signal 616. The proportional and integral gains 606, 608 of the second PI regulator 602 can be fixed or dynamic gains and can be determined based on desired operations of the wind farm 200 and/or a relative number of first wind turbines 202a in the wind farm 200.

Further, the reactive power regulator 600 may operate in two different modes depending on a state of a mode select switch 618, which may be controlled by a reactive power regulation mode select signal (QRegFrz). When the mode select switch 618 is in position "0", the reactive power regulator 600 may prevent determination of the reactive power balance signal (Q_{bal}). The mode select switch 618 may be in the position "0" when the farm-level controller 222 is communicating with the second controller(s) 26b. Conversely, the mode select switch 618 may be in position "1" when the farm-level controller 222 is communicating with the first controller(s) 261. When the mode select switch 618 is in the position "1", the reactive power regulator 600 can then apply the second PI signal 616 to a limiter 620. The limiter 620 may place limits on the second PI signal 616 as appropriate to respect equipment rating(s). For instance, the limiter 620 may limit the second PI signal 616 by an upper limit 622 and a lower limit 624. The upper limit 622 and the lower limit 624 of the limiter 620 may be fixed variables or dynamic.

Furthermore, the reactive power regulator 600 can receive one or more reactive power feedback signals (Q_{fbk_var_on}) from the first wind turbines 202a in the wind farm 200 that are active (i.e., online). For instance, the first controller(s) 26a associated with the active first wind turbine(s) 202a (i.e., the wind turbines configured to be controller by the reactive power command signal) can provide the reactive power feedback signal(s) (Q_{fbk_var_on}) to the reactive power regulator 600. The reactive power regulator 600 can then determine a reactive power balance signal (Q_{bal}) for each of the active first wind turbines 202a based on the limited second PI signal 616 and the reactive power feedback signal(s) (Q_{fbk_on}). For instance, the limited second PI signal 616 and the reactive power feedback signal(s) (Q_{fbk_on}) can be provided to a reactive power balance distributor 626 that determines (e.g. using a proportional distribution algorithm) the reactive power balance signal(s) (Q_{bal}) for distribution to each of the first controller(s) 26a. In addition, the reactive power regulator 600 can then provide the reactive power balance signal(s) (Q_{bal}) to the VAR distributor 700. For instance, the reactive power regulator 600 can provide an array that associates the reactive power balance signal(s) (Q_{bal}) with the first controller(s) 26a.

As shown in the embodiment illustrated in FIG. 8, the VAR distributor 700 may be configured to determine one or more reactive power command signals (Q_{cmd}) for the first controller(s) 26a based on the reactive power balance signal(s) (Q_{bal}). More specifically, as shown, the VAR distributor 700 may receive the reactive power balance signal(s) (Q_{bal}) from the reactive power regulator 600. Further, the VAR distributor 700 may receive one or more feedback signals. In particular, the VAR distributor 700 may receive a first reactive power feedback signal (Q_{fbkvar}) from each of the first controller(s) 26a (e.g., regardless of whether the related first wind turbine(s) 202a is online), and a second reactive power feedback signal (Q_{fbkvref}) from each of the second controller(s) 26b (e.g., regardless of whether the related second wind turbine(s) 202b is online). The VAR distributor 700 may then determine a total reactive power feedback signal (Q_{fbktot}) by combining (e.g., via a summator 702) the first and second active power feedback signals (Q_{fbkvar}, Q_{fbkvref}), as shown.

Furthermore, the VAR distributor 700 can determine an average reactive power signal (Q_{avg}) based on the total reactive power feedback signal (Q_{fbktot}). For example, as shown at 704, the total reactive power feedback signal (Q_{fbktot}) can be divided by a total number of wind turbines 202a, 202b in the wind farm 200. Moreover, the VAR distributor 700 can provide the average reactive power signal (Q_{avg}) to a total reactive power balance distributor 706. The total reactive power balance distributor 706 can determine (e.g. using a proportional distribution algorithm) a respective reactive power control signal (Q_{con}) for distribution to each of the first and second controller(s) 26a, 26b. For instance, the total reactive power balance distributor 706 can output an array that associates the respective reactive power control signal (Q_{con}) with each of the first and second controller(s) 26a, 26b.

In addition, the VAR distributor 700 can determine the reactive power command signal(s) (Q_{cmd}) to be distributed to the respective first and second controller(s) 26a, 26b based on the respective reactive power control signal(s) (Q_{con}) and the reactive power balance signal(s) (Q_{bal}). For instance, the VAR distributor 700 can combine (e.g., via a summator 708) the respective reactive power control signal(s) (Q_{con}) for distribution to each of the first controller(s) 26a and the respective reactive power balance signal(s) (Q_{bal}) for distribution to each of the first controller(s) 26a to obtain the reactive power command signal(s) (Q_{cmd}) for distribution to the respective first controller(s) 26a. In addition, the VAR distributor 700 can determine the reactive power command signal(s) (Q_{cmd}) for distribution to the respective second controller(s) 26b is the respective reactive power control signal(s) (Q_{con}) for distribution to each of the second controller(s) 26b. That is, the VAR distributor 700 can be configured to adjust the reactive power control signal(s) (Q_{con}) for distribution to each of the first controller(s) 26a based on the respective reactive power balance signal(s) (Q_{bal}) while maintaining the reactive power control signal(s) (Q_{con}) for distribution to each of the second controller(s) 26b. The VAR distributor 700 can then provide the reactive power command signal(s) (Q_{cmd}) to the respective first and second controller(s) 26a, 26b (e.g., as an array that associates each of the reactive power command signal(s) (Q_{cmd}) with the respective first and second controller(s) 26a, 26b). As such, the first controller(s) 26a can control the first wind turbine(s) 202a based at least partially on the reactive power command signal(s) (Q_{cmd}).

Thus, the control scheme 400 of the present disclosure fully utilizes dynamic reactive power capabilities of reactive power referenced based inverters and voltage referenced based inverters. Hence, the control scheme 400 of the present disclosure permits seamless regulation of voltage/VAR at the point of interconnection for a farm including a combination of reactive power regulated and voltage regulated inverters.

Further aspects of the invention are provided by the subject matter of the following clauses:
A method for regulating voltage at a point of interconnection between a plurality of inverter-based resources (IBRs) and an electrical grid, wherein the plurality of IBRs include a first IBR configured to be controlled based at least partially on a reactive power command signal and a second IBR configured to be controlled based at least partially on a voltage command signal, the method comprising: determining, via a supervisory controller, a voltage error signal based at least partially on a voltage feedback signal and a voltage reference signal; determining, via the supervisory controller, a voltage command signal and a reactive power balance signal based at least partially on the voltage error signal; providing, via the supervisory controller, the voltage command signal to the second IBR; determining, via the supervisory controller, a reactive power command signal based at least partially on the reactive power balance signal; and providing, via the supervisory controller, the reactive power command signal to the first IBR.

The method of any preceding clause, wherein determining, via the supervisory controller, the voltage command signal and the reactive power balance signal based at least partially on the voltage error signal further comprises: determining, via the supervisory controller, a first proportional-integral (PI) signal based on providing the voltage error signal to a first PI regulator; and determining the voltage command signal based on the first PI signal.

The method of any preceding clause, further comprising: determining, via the supervisory controller, a second PI signal based on providing the voltage error signal to a second PI regulator; and determining, via the supervisory controller, the reactive power balance signal based at least partially on the second PI signal.

The method of any preceding clause, further comprising limiting, via the supervisory controller, the second PI signal by an upper limit and a lower limit.

The method of any preceding clause, wherein determining, via the supervisory controller, the reactive power balance signal based at least partially on the second PI signal further comprises: receiving, via a reactive power balance distributor programmed in the supervisory controller, the reactive power balance signal based on the limited second PI signal and a reactive power feedback signal associated with the first IBR.

The method of any preceding clause, wherein determining, via the supervisory controller, the reactive power command signal based at least partially on the reactive power balance signal further comprises: receiving, via a total reactive power balance distributor programmed in the supervisory controller, a reactive power expected signal based on an average reactive power signal; and determining, via the supervisory controller, the reactive power command signal based on the reactive power expected signal and the reactive power balance signal.

The method of any preceding clause, further comprising determining, via the supervisory controller, the average reactive power signal based on a first reactive power feedback signal associated with the first IBR and a second reactive power feedback signal associated with the second IBR.

The method of any preceding clause, further comprising determining, via the supervisory controller, the voltage reference signal based at least partially on a voltage setpoint signal.

The method of any preceding clause, further comprising determining, via the supervisory controller, the voltage reference signal based additionally on a reactive power setpoint or a power factor setpoint.

The method of any preceding clause, further comprising: controlling, via a first controller, the first IBR based at least partially on the reactive power command signal; and controlling, via a second controller, the second IBR based at least partially on the voltage command signal.

A wind farm, comprising: a plurality of wind turbines including a first wind turbine configured to be controlled based at least partially on a reactive power command signal and a second wind turbine configured to be controlled based at least partially on a voltage command signal; and a farm-level controller comprising at least one processor, the at least one processor configured to perform a plurality of operations, the plurality of operations comprising: determining a voltage error signal based at least partially on a voltage feedback signal and a voltage reference signal; determining a voltage command signal and a reactive power balance signal based at least partially on the voltage error signal; providing the voltage command signal to the second wind turbine; determining a reactive power command signal based at least partially on the reactive power balance signal; and providing the reactive power command signal to the first wind turbine.

The wind farm of any preceding clause, wherein determining the voltage command signal and the reactive power balance signal based at least partially on the voltage error signal further comprises: determining a first proportional-integral (PI) signal based on providing the voltage error signal to a first PI regulator; and determining the voltage command signal based on the first PI signal.

The wind farm of any preceding clause, wherein determining the voltage command signal and the reactive power balance signal based at least partially on the voltage error signal further comprises: determining a second PI signal based on providing the voltage error signal to a second PI regulator; and determining the reactive power balance signal based at least partially on the second PI signal.

The wind farm of any preceding clause, wherein the plurality of operations further comprise limiting the second PI signal by an upper limit and a lower limit.

The wind farm of any preceding clause, wherein determining the reactive power balance signal based at least partially on the second PI signal further comprises: receiving, via a reactive power balance distributor programmed in the farm-level controller, the reactive power balance signal based on the limited second PI signal and a reactive power feedback signal associated with the first wind turbine.

The wind farm of any preceding clause, wherein determining the reactive power command signal based at least partially on the reactive power balance signal further comprises: receiving, via a total reactive power balance distributor programmed in the farm-level controller, a reactive power expected signal based on an average reactive power signal; and determining the reactive power command signal based on the reactive power expected signal and the reactive power balance signal.

The wind farm of any preceding clause, wherein the plurality of operations further comprise determining the average reactive power signal based on a first reactive power feedback signal associated with the first wind turbine and a second reactive power feedback signal associated with the second wind turbine.

The wind farm of any preceding clause, wherein the plurality of operations further comprise determining the voltage reference signal based at least partially on a voltage setpoint signal.

The wind farm of any preceding clause, wherein the plurality of operations further comprise determining the voltage reference signal based additionally on a reactive power setpoint or a power factor setpoint.

The wind farm of any preceding clause, further comprising: a first turbine controller comprising at least one processor, the at least one processor configured to perform a first plurality of operations, the plurality of first operations comprising controlling the first wind turbine based at least partially on the reactive power command signal; and a second turbine controller comprising at least one processor, the at least one processor configured to perform a second plurality of operations, the plurality of second operations comprising controller the second wind turbine based at least partially on the voltage command signal.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A method for regulating voltage at a point of interconnection between a plurality of inverter-based resources (IBRs) and an electrical grid, wherein the plurality of IBRs include a first IBR configured to be controlled based at least partially on a reactive power command signal and a second IBR configured to be controlled based at least partially on a voltage command signal, the method comprising:
determining, via a supervisory controller, a voltage error signal based at least partially on a voltage feedback signal and a voltage reference signal;
determining, via the supervisory controller, a voltage command signal and a reactive power balance signal based at least partially on the voltage error signal;
providing, via the supervisory controller, the voltage command signal to the second IBR;
determining, via the supervisory controller, a reactive power command signal based at least partially on the reactive power balance signal; and
providing, via the supervisory controller, the reactive power command signal to the first IBR.

2. The method of claim 1, wherein determining, via the supervisory controller, the voltage command signal and the reactive power balance signal based at least partially on the voltage error signal further comprises:
determining, via the supervisory controller, a first proportional-integral (PI) signal based on providing the voltage error signal to a first PI regulator; and
determining the voltage command signal based on the first PI signal;
the method preferably further comprising:
determining, via the supervisory controller, a second PI signal based on providing the voltage error signal to a second PI regulator; and
determining, via the supervisory controller, the reactive power balance signal based at least partially on the second PI signal.

3. The method of claim 2, further comprising limiting, via the supervisory controller, the second PI signal by an upper limit and a lower limit.

4. The method of claim 3, wherein determining, via the supervisory controller, the reactive power balance signal based at least partially on the second PI signal further comprises:
receiving, via a reactive power balance distributor programmed in the supervisory controller, the reactive power balance signal based on the limited second PI signal and
a reactive power feedback signal associated with the first IBR.

5. The method of any of the preceding claims, wherein determining, via the supervisory controller, the reactive power command signal based at least partially on the reactive power balance signal further comprises:
receiving, via a total reactive power balance distributor programmed in the supervisory controller, a reactive power expected signal based on an average reactive power signal; and
determining, via the supervisory controller, the reactive power command signal based on the reactive power expected signal and the reactive power balance signal.

6. The method of claim 5, further comprising determining, via the supervisory controller, the average reactive power signal based on a first reactive power feedback signal associated with the first IBR and a second reactive power feedback signal associated with the second IBR.

7. The method of any of the preceding claims, further comprising determining, via the supervisory controller, the voltage reference signal based at least partially on a voltage setpoint signal;
the method preferably further comprising determining, via the supervisory controller,
the voltage reference signal based additionally on a reactive power setpoint or a power factor setpoint.

8. The method of any of the preceding claims, further comprising:
controlling, via a first controller, the first IBR based at least partially on the reactive power command signal; and
controlling, via a second controller, the second IBR based at least partially on the voltage command signal.

9. A wind farm, comprising:
a plurality of wind turbines including a first wind turbine configured to be controlled based at least partially on a reactive power command signal and a second wind turbine configured to be controlled based at least partially on a voltage command signal; and
a farm-level controller comprising at least one processor, the at least one processor configured to perform a plurality of operations, the plurality of operations comprising:
determining a voltage error signal based at least partially on a voltage feedback signal and a voltage reference signal;
determining a voltage command signal and a reactive power balance signal based at least partially on the voltage error signal;
providing the voltage command signal to the second wind turbine;
determining a reactive power command signal based at least partially on the reactive power balance signal; and
providing the reactive power command signal to the first wind turbine.

10. The wind farm of claim 9, wherein determining the voltage command signal and the reactive power balance signal based at least partially on the voltage error signal further comprises:
determining a first proportional-integral (PI) signal based on providing the voltage error signal to a first PI regulator; and
determining the voltage command signal based on the first PI signal.

11. The wind farm of claim 9 or 10, wherein determining the voltage command signal and the reactive power balance signal based at least partially on the voltage error signal further comprises:
determining a second PI signal based on providing the voltage error signal to a second PI regulator; and
determining the reactive power balance signal based at least partially on the second PI signal;
wherein the plurality of operations preferably further comprise limiting the second PI signal by an upper limit and a lower limit;
wherein determining the reactive power balance signal based at least partially on the second PI signal preferably further comprises:
receiving, via a reactive power balance distributor programmed in the farm-level controller, the reactive power balance signal based on the limited second PI signal and a reactive power feedback signal associated with the first wind turbine.

12. The wind farm of any of the claims 9 - 11, wherein determining the reactive power command signal based at least partially on the reactive power balance signal further comprises:
receiving, via a total reactive power balance distributor programmed in the farm-level controller, a reactive power expected signal based on an average reactive power signal; and
determining the reactive power command signal based on the reactive power expected signal and the reactive power balance signal;
wherein the plurality of operations preferably further comprise determining the average reactive power signal based on a first reactive power feedback signal associated with the first wind turbine and a second reactive power feedback signal associated with the second wind turbine.

13. The wind farm of any of the claims 9 - 12, wherein the plurality of operations further comprise determining the voltage reference signal based at least partially on a voltage setpoint signal.

14. The wind farm of claim 13, wherein the plurality of operations further comprise determining the voltage reference signal based additionally on a reactive power setpoint or a power factor setpoint.

15. The wind farm of any of the claims 9 - 14, further comprising:
a first turbine controller comprising at least one processor, the at least one processor configured to perform a first plurality of operations, the plurality of first operations comprising controlling the first wind turbine based at least partially on the reactive power command signal; and
a second turbine controller comprising at least one processor, the at least one processor configured to perform a second plurality of operations, the plurality of second operations comprising controller the second wind turbine based at least partially on the voltage command signal.
